# EUROPEAN PATENT APPLICATION

(11) **EP 1 931 119 A1**
(43) Date of publication of application: **11.06.2008**
(21) Application number: 07023477.8
(22) Date of filing: 04.12.2007
(51) Int. Cl.: H04M 1/247, H04M 1/67

(54) **Portable terminal device and control method thereof**

(30) Priority: 05.12.2006 JP 2006328542
(71) Applicant: Funai Electric Co., Ltd., Daito-shi, Osaka 574-0013 (JP)
(72) Inventor: Takeshita, Masahiro, Daito-shi Osaka 574-0013 (JP); Masaki, Yasuo, Daito-shi Osaka 574-0013 (JP)
(74) Representative: Grünecker, Kinkeldey, Stockmair & Schwanhäusser Anwaltssozietät

(57) **Abstract**

Upon determination that a portable terminal device is in a conversation state, a CPU (100) disables a touch panel (20). The CPU determines whether an external output device is connected to the portable terminal device via a connector (19). Upon determination that the external output device is connected to the portable terminal device via the connector, the CPU enables the disabled touch panel. Upon determination that a handsfree function is effective, the CPU enables the disabled touch panel. The CPU determines whether a touch panel button (18) is enabled. Upon determination that the touch panel button is enabled, the CPU enables the disabled touch panel.

## Description

### BACKGROUND OF THE INVENTION

### Field of the Invention

The present invention relates to a portable terminal device having a conversation function, in particular, a portable terminal device having a function of preventing an erroneous operation due to an erroneous touch of a touch panel during conversations.

### Description of the Background Art

Conventionally, a portable terminal device such as a cellular phone or a PDA (Personal Digital Assistant) commonly has not only a communication function by conversations, but also a communication function using an e-mail, an Internet browser or the like. In addition, a display unit, that is, a liquid crystal screen of such a portable terminal device tends to become large in size in order to improve viewability.

In recent years, the portable terminal device also has various functions such as a function of managing a schedule of an individual and a function of retrieving information any time with the use of a dictionary and a manual each stored therein. In order to improve operability, the portable terminal device includes a touch panel in addition to a normal input unit for key operations.

As for such a portable terminal device, there has been considered a mechanism for preventing an erroneous operation due to unintentional input through a button by a user.

For example, Japanese Patent Laying-Open No. 2002-135369 discloses the following technique: When a user touches a touch panel used as a sensor, the touch panel detects a conversation state to disable all key operations.

On the other hand, Japanese Patent Laying-Open No. 11-168553 discloses the following technique: Even in a case of disabling all key operations in an erroneous operation prevention mode, a touch sensor resets the erroneous operation prevention mode to enable the key operations upon detection of a conversation state. Alternatively, Japanese Patent Laying-Open No. 11-041165 discloses the following technique: When a user touches a touch sensor, the touch sensor temporarily resets an erroneous operation prevention mode to enable key operations.

In order to utilize various functions of a portable terminal device during conversations, for example, in order to call and display a registered phone number or the like and inform the phone number after confirmation of the phone number, typically, a user must perform some key operations even during the conversations.

As for the conventional portable terminal device including the touch panel, however, the user holds conversations with a counterpart in such a manner that a user's ear comes into contact with or approaches a voice output part. Herein, a user's earlobe, part of a user's face, or an earring comes into contact with the large touch panel provided on a front side of the portable terminal device. Consequently, the portable terminal device erroneously determines that an input operation is performed through the touch panel. As a result, the portable terminal device is actuated unintentionally during the conversations. Alternatively, the portable terminal device starts to perform erroneous operations irrelevant to a conversation operation. In worst cases, the portable terminal device erroneously deletes data stored therein.

### SUMMARY OF THE INVENTION

The present invention has been devised in view of the aforementioned circumstances. An object of the present invention is to provide a portable terminal device having a touch panel, which readily prevents an erroneous input operation and is excellent in convenience.

According to one aspect of the present invention, a portable terminal device having a conversation function includes an input unit using a touch panel and an operating key button, and a control unit adjusting a recognition rate of the touch panel. Herein, the operating key button has a conversation button for exerting the conversation function. Moreover, the control unit disables the touch panel upon detection of depression of the conversation button by a user.

Preferably, the portable terminal device further includes a connector establishing a connection between the portable terminal device and an external device. Herein, when the external device is connected to the portable terminal device via the connector, the control unit adjusts the recognition rate of the touch panel to enable the disabled touch panel upon detection of the depression of the conversation button by the user.

Preferably, when a handsfree function is exerted in response to a command inputted by the user, the control unit adjusts the recognition rate of the touch panel to enable the disabled touch panel upon detection of the depression of the conversation button by the user.

Preferably, the operating key button has a touch panel button for enabling the disabled touch panel in response to a command inputted by the user. Moreover, when the user depresses the touch panel button, the control unit adjusts the recognition rate of the touch panel to enable the disabled touch panel upon detection of the depression of the conversation button by the user.

According to another aspect of the present invention, a control method of a portable terminal device having a conversation function includes a step of detecting input through a touch panel and input through a conversation button, and a step of adjusting a recognition rate of the touch panel. Herein, upon detection of the input through the conversation button, the touch panel is disabled in the adjustment step.

According to the present invention, the portable terminal device includes the control unit. Upon detection of the fact that the user has depressed the conversation button, the control unit disables the touch panel, so that the touch panel is disabled in principle. Accordingly, the portable terminal device having the touch panel can readily prevent an erroneous input operation.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an external view showing a configuration of a portable terminal device according to one embodiment of the present invention.
Fig. 2 is a block diagram showing a schematic configuration of the portable terminal device according to the embodiment of the present invention.
Fig. 3 is a flowchart showing a flow of processes for controlling a state of a touch panel according to the embodiment of the present invention.

### DESCRIPTION OF THE PREFERRED EMBODIMENTS

With reference to the drawings, hereinafter, detailed description will be given of preferred embodiments of the present invention. In the drawings, identical or corresponding components are denoted by identical reference numerals; therefore, repetitive description thereof will not be given here.

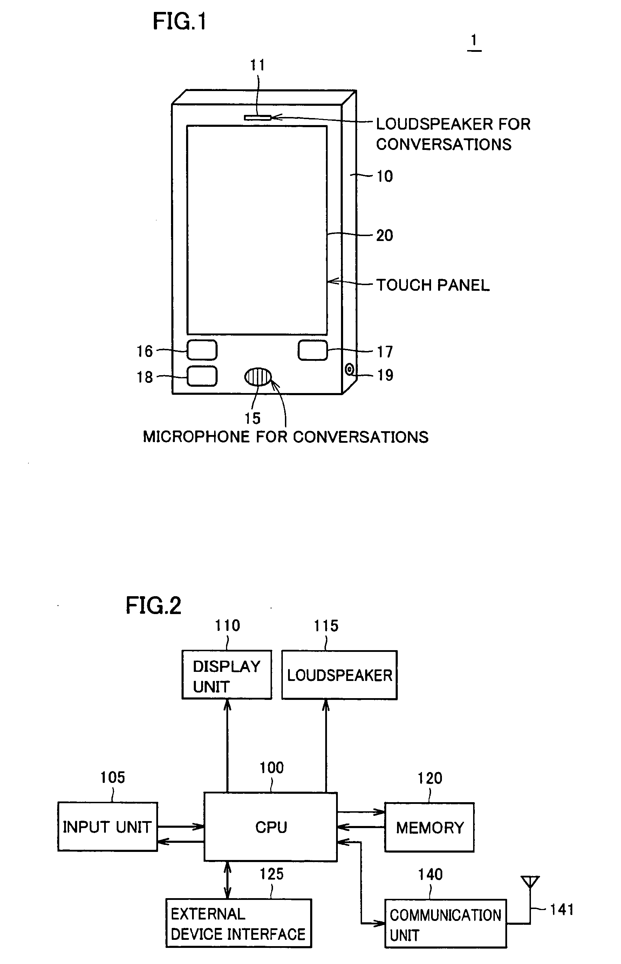

With reference to Fig. 1, first, description will be given of an external configuration of a portable terminal device 1 according to one embodiment of the present invention.

Herein, Fig. 1 shows a front side of portable terminal device 1.

Specifically, portable terminal device 1 includes a housing 10. Herein, a loudspeaker 11 for conversations, a touch panel 20, a microphone 15 for conversations, a call button 16 and a conversation interruption button 17 (examples of an operating key), a touch panel button 18 (to be described later), and a connector 19 are provided on a front surface of housing 10. Fig. 1 shows only the three buttons; however, the present invention is not particularly limited to this example. Alternatively, an operating key such as a dial key may be provided additionally, for example.

In a state where a user of portable terminal device 1 holds conversations with a counterpart, loudspeaker 11 outputs an audio signal transmitted from a device of the counterpart.

Touch panel 20 is used as follows: When the user touches a screen of touch panel 20 with a user's finger or through a dedicated pen, touch panel 20 detects a touched portion to designate a relevant position on the screen and selects various functions of the device. However, this technique is well known; therefore, detailed description thereof will not be given here.

In the conversations with the counterpart, microphone 15 receives voice of the user of portable terminal device 1 in a form of an audio signal to transmit the audio signal to the device of the counterpart.

In order to start the conversations with the counterpart, the user operates call button 16 to send information such as a phone number of the counterpart. Moreover, the user operates call button 16 so as to start to hold conversations with the counterpart. That is, portable terminal device 1 enters the conversation state when the user depresses call button 16. In the conversation state (to be described later), the user further depresses call button 16 to exert a handsfree function which allows the user to hold conversations without hand-holding portable terminal device 1. In this embodiment, description will be given of a technique in which call button 16 is related to the exertion of the handsfree function; however, the present invention is not particularly limited to this example. Alternatively, a dedicated button may be provided for exertion of the handsfree function, for example. Of course, a separate button may be provided for exertion of the handsfree function, for example.

The user operates conversation interruption button 17 to complete the conversations with the counterpart. That is, the user depresses conversation interruption button 17 to interrupt communications.

The user operates touch panel button 18 to enable/disable touch panel 20 in response to user's input.

Connector 19 is used for establishment of a connection between portable terminal device 1 and an external device such as an earphone.

With reference to Fig. 2, portable terminal device 1 according to the embodiment of the present invention includes a CPU 100 which controls portable terminal device 1 as a whole, an input unit 105 which receives a command inputted through touch panel 20 or a command inputted through the operating key, a display unit 110 which displays characters, symbols, graphics and the like, a loudspeaker 115 which outputs sound, a memory 120 which stores programs for execution of the various functions of portable terminal device 1, and data information, a communication unit 140 which carries out communications via a telephone office or the like, an antenna 141 which receives radio waves from the telephone office or the like, and an external device interface 125 which establishes a connection between portable terminal device 1 and the external device. External device interface 125 includes connector 19. Display unit 110 includes a liquid crystal screen or the like for use in touch panel 20. CPU 100 adjusts a recognition rate of touch panel 20 to enable/disable touch panel 20. In order to disable touch panel 20, the recognition rate of touch panel 20 is set at zero. Additionally, the recognition rate is set at a value lower than an initial value. Information about the recognition rate is stored in memory 120 in advance, and is read from memory 120 as necessary.

In accordance with the embodiment of the present invention, hereinafter, description will be given of a method for preventing an erroneous operation of touch panel 20 during conversations.

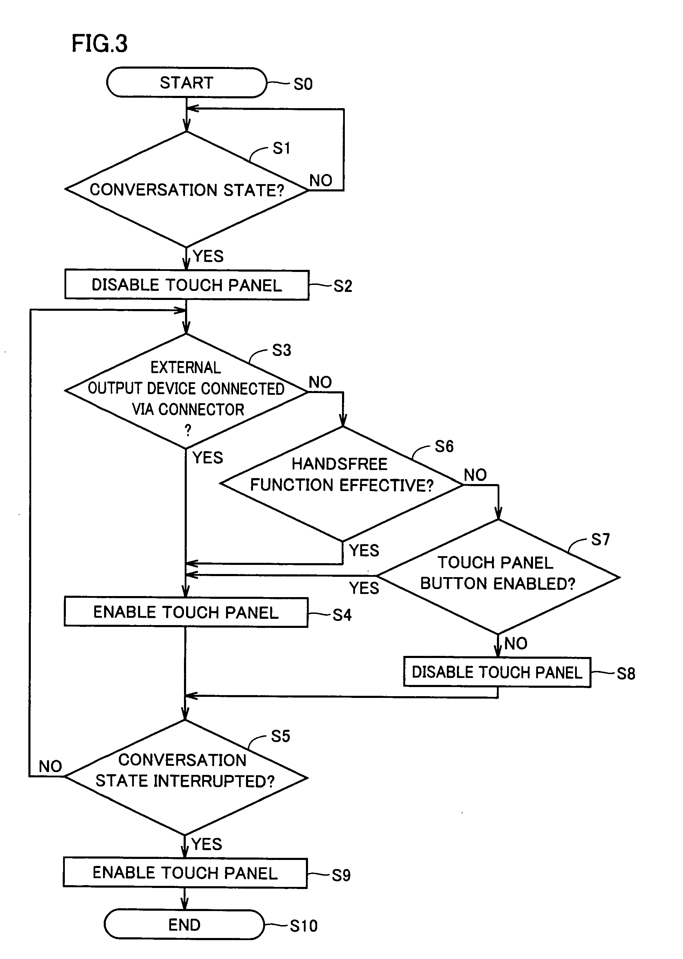

With reference to Fig. 3, next, description will be given of a flow of processes for controlling the state of touch panel 20 according to the embodiment of the present invention.

As shown in Fig. 3, first, CPU 100 receives input from input unit 105 (step S0), and then determines whether portable terminal device 1 is in the conversation state (step S1). Specifically, CPU 100 determines whether the user has depressed call button 16.

Upon determination that portable terminal device 1 is in the conversation state, CPU 100 disables touch panel 20 (step S2).

Next, CPU 100 determines whether an external output device is connected to portable terminal device 1 via connector 19 (step S3). Herein, the external output device is an earphone or the like; however, the present invention is not particularly limited to this example. Alternatively, the external output device may be a loudspeaker or the like, for example. When the earphone or the like is connected to portable terminal device 1 via connector 19, external device interface 125 outputs to CPU 100 a signal indicative of a fact that the earphone or the like is connected to portable terminal device 1 via connector 19.

Upon determination that the external output device is connected to portable terminal device 1 via connector 19 in step S3, CPU 100 enables disabled touch panel 20 (step S4).

Next, a procedure proceeds to step S5. In step S5, CPU 100 determines whether the conversation state is interrupted. If the conversation state is held, the procedure returns to step S3.

If CPU 100 determines that no external output device is connected to portable terminal device 1 via connector 19 in step S3, the procedure proceeds to step S6. In step S6, CPU 100 determines whether the handsfree function is effective. In the conversation state, as described above, CPU 100 determines whether the user has further depressed call button 16. The handsfree function is exerted when call button 16 is depressed in the conversation state and then is depressed again. The handsfree function is canceled when the user inputs a command through call button 16 in the state where the handsfree function is exerted.

Upon determination that the handsfree function is effective in step S6, CPU 100 enables disabled touch panel 20 (step S4). Thereafter, CPU 100 executes the processes in step 5 and subsequent to step 5 as described above.

Upon determination that the handsfree function is ineffective in step S6, on the other hand, CPU 100 determines whether touch panel button 18 is enabled (step S7). In an initial state, touch panel button 18 is disabled. When touch panel button 18 is depressed, touch panel 20 is enabled. Then, when touch panel button 18 is depressed again, touch panel 20 is disabled.

Upon determination that the user has further depressed touch panel button 18 in the conversation state in step S7, CPU 100 enables disabled touch panel 20 (step S4). Thereafter, CPU 100 executes the processes in step S5 and subsequent to step S5 as described above.

Upon determination that touch panel button 18 is disabled in step S7, CPU 100 disables touch panel 20 (step S8). Then, the procedure proceeds step S5.

Upon determination that the conversation state is interrupted in step S5, CPU 100 enables touch panel 20 (step S9), and then completes the procedure (step S10). That is, portable terminal device 1 is in a standby state.

The aforementioned touch panel according to the embodiment of the present invention is disabled in principle in the conversation state. Accordingly, the portable terminal device having such a touch panel can readily prevent an erroneous input operation. For example, in the case where the external output device such as an earphone is connected to the portable terminal device via the connector, in the case where the handsfree function is exerted, or in the case where the touch panel button is enabled by the user's intention, the disabled touch panel is enabled.

Typically, in the case where the external output device such as an earphone is connected to the portable terminal device via the connector or in the case where the handsfree function is exerted, there is a high possibility that the portable terminal device is spaced away from a user's face. In other words, there is a low possibility that the touch panel of the portable terminal device is operated erroneously.

In the embodiment of the present invention, accordingly, if there is a high possibility that the portable terminal device is spaced away from the user's face, more specifically, if the external output device such as an earphone is connected to the portable terminal device via the connector or if the handsfree function is exerted, the touch panel is enabled, so that the user can operate the touch panel during conversations. In the case where the user enables the touch panel button so as to operate the touch panel on the basis of a user's intention, the touch panel is enabled during the conversations in preference to the user's intention. Thus, the portable terminal device becomes excellent in convenience.

During the conversations, all the operating keys may be enabled. Alternatively, when only the optional operating keys are enabled as necessary, a possibility of erroneous input operations can be further eliminated.

Although the present invention has been described and illustrated in detail, it is clearly understood that the same is by way of illustration and example only and is not to be taken by way of limitation, the scope of the present invention being interpreted by the terms of the appended claims.

## Claims

1. A portable terminal device (1) having a conversation function, comprising:
an input unit (105) using a touch panel (20) and an operating key button; and
a control unit (100) adjusting a recognition rate of said touch panel, wherein
said operating key button has a conversation button (16) for exerting the conversation function, and
said control unit disables said touch panel upon detection of depression of said conversation button by a user.

2. The portable terminal device according to claim 1, further comprising:
a connector (19) establishing a connection between said portable terminal device and an external device, wherein
when said external device is connected to said portable terminal device via said connector, said control unit adjusts the recognition rate of said touch panel to enable said disabled touch panel upon detection of the depression of said conversation button by the user.

3. The portable terminal device according to claim 1, wherein
when a handsfree function is exerted in response to a command inputted by said user, said control unit adjusts the recognition rate of said touch panel to enable said disabled touch panel upon detection of the depression of said conversation button by the user.

4. The portable terminal device according to claim 1, wherein
said operating key button has a touch panel button (18) for enabling said disabled touch panel in response to a command inputted by said user, and
when said user depresses said touch panel button, said control unit adjusts the recognition rate of said touch panel to enable said disabled touch panel upon detection of the depression of said conversation button by the user.

5. A control method of a portable terminal device having a conversation function, comprising the steps of:
detecting input through a touch panel and input through a conversation button; and
adjusting a recognition rate of said touch panel, wherein the step of adjusting the recognition rate includes the step of, upon detection of the input through said conversation button, disabling said touch panel.
